(19) Europäisches Patentamt
European Patent Office
Office européen des brevets

(11) Publication number: 0 275 988 A2

(12) EUROPEAN PATENT APPLICATION

(21) Application number: 88100771.0

(22) Date of filing: 20.01.88

(51) Int. Cl.[4]: C 08 G 69/44
C 08 G 18/34, C 08 G 18/42

(30) Priority: 22.01.87 JP 13455/87
06.03.87 JP 52270/87
06.03.87 JP 52272/87
07.12.87 JP 309992/87
25.08.87 JP 212171/87

(43) Date of publication of application:
27.07.88 Bulletin 88/30

(84) Designated Contracting States:
BE CH DE FR GB IT LI NL

(71) Applicant: KURARAY CO., LTD.
1621 Sakazu
Kurashiki-City Okayama Prefecture (JP)

(72) Inventor: Komiya, Yukiatsu
No. 1-203, 1660, Sakazu
Kurashiki-city Okayama-pref. (JP)

Ishida, Masao
Aoe-Ryo No. 2047-1, Aoeyama Sakazu
Kurashiki-city Okayama-pref. (JP)

Hirai, Koji
No. 344-9, Ohjima
Kurashiki-city Okayama-pref. (JP)

Yamashita, Setuo
No. 1-406, 1660, Sakazu
Kurashiki-city Okayama-pref. (JP)

Komori, Shinji Sasaki-Haitsu 10
No. 1068-3, Nishihara Nishiachi-tyo
Kurashiki-city Okayama-pref. (JP)

Okaya, Takuji
No. 2-46, Umegaoka
Nagaokakyo-city Kyoto-fu (JP)

(74) Representative: Vossius & Partner
Siebertstrasse 4 P.O. Box 86 07 67
D-8000 München 86 (DE)

(54) **Polyamide copolymers.**

(57) Described are polyamide copolymers having skeletons of a specific structure. The polyamide copolymers have excellent resistance to hydrolysis, low temperature characteristics (low temperature softness), heat aging resistance and mechanical properties as compared to conventional polyamide copolymers. The polyamide copolymers also show excellent processibility and transparency. In particular, polyamide copolymers having a branched structure in the molecule exhibit good properties.

EP 0 275 988 A2

**Description**

## POLYAMIDE COPOLYMERS

The present invention relates to novel polyamide copolymers (hereafter sometimes simply referred to as polyamides) showing excellent resistance to hydrolysis, low temperature characteristics (low temperature softness), heat aging resistance and mechanical properties and excellent processibility and transparency.

Polyester polyamide copolymers obtained by reacting organic diisocyanates with dicarboxylic acids and methods for their production are described, for example, in US-A-4,087,481, 4,129,715 and 4,156,065. It is well known that these copolymers have good softness, elasticity properties and mechanical properties, as well as oil and chemical resistance and heat resistance.

However, these conventional polyester polyamide copolymers show poor transparency and high temperature dependency of their melt viscosity. It is therefore difficult to process these copolymers by molding techniques used for other thermoplastic resins. In addition, these conventional polyester polyamide copolymers, also cause problems in respect of resistance to hydrolysis and heat aging.

For example, when polyester polyamide copolymers having poor resistance to hydrolysis are worked into films, their surfaces tend to become sticky in a relatively short time or cause cracking. Accordingly, the polyester polyamide copolymers are considerably limited in use. The polyester polyamide copolymers of this kind can be improved in respect of resistance to hydrolysis only to a limited degree, because of their substantial content of ester groups. On the other hand, when polyethers are used in place of polyesters, the resulting copolymers show extremely poor resistance to oxidative aging while their resistance to hydrolysis is improved.

It is the object of the present invention to provide novel polyamide copolymers of improved processibility, transparency, resistance to hydrolysis, low temperature characteristics and heat aging resistance, without impairing the excellent heat resistance and mechanical properties of conventional polyester polyamide copolymers.

As a result of extensive investigations to achieve the foregoing object, the present inventors have surprisingly discovered that by a specific structural unit contained in the molecule of the polyamide copolymers as a part of a soft segment, polyamides which are excellent not only in respect of resistance to hydrolysis, low temperature characteristics and heat aging resistance but also in respect of processibility and transparency can be obtained.

Thus, the present invention relates to polyamide copolymers comprising repeating units represented by the general formulae [I] and [II] and containing at least 10 mol% of repeating units of the general formula [II], and having a number average molecular weight of 5000 to 250,000.

$$\left( NH-R_1-NH-\overset{\overset{\displaystyle O}{\|}}{C}-R_2-\overset{\overset{\displaystyle O}{\|}}{C} \right) \qquad [I]$$

$$\left( NH-R'_1-NH-\overset{\overset{\displaystyle O}{\|}}{C}-A-\overset{\overset{\displaystyle O}{\|}}{C} \right) \qquad [II]$$

wherein $R_1$, $R'_1$ and $R_2$, which may be the same or different, each represents a hydrocarbon residue and A represents a segment containing at least one repeating unit selected from the group consisting essentially of general formulae [III], [IV], [V] and [VI] described below.

$$-\!\left[O\!\left(CH_2\right)_6\overset{CH_3}{\overset{|}{C}}H-CH_2-O-\overset{O}{\overset{\|}{C}}-R_3-\overset{O}{\overset{\|}{C}}\right]\qquad [III]$$

$$\left(O-CH_2-CH_2-\overset{CH_3}{\overset{|}{C}}H-CH_2-CH_2-O-\overset{O}{\overset{\|}{C}}-R_3-\overset{O}{\overset{\|}{C}}\right)\qquad [IV]$$

$$\left(O-CH_2-CH_2-\overset{CH_3}{\overset{|}{C}}H-CH_2-\overset{O}{\overset{\|}{C}}\right)\qquad [V]$$

$$\left(O-R_4-O-\overset{O}{\overset{\|}{C}}\right)\qquad [VI]$$

wherein $R_3$ and $R_4$, which may be the same or different, each represents a hydrocarbon residue.

In the present invention, the polyamides comprising repeating units represented by general formulae [I] and [II] can be obtained by known methods, for example, from an organic diisocyanate component and a specific dicarboxylic acid component but other starting materials may also be used. The method of preparation can be preformed in the presence or absence of an inert organic solvent and in the presence or absence of a catalyst. The equivalent weight ratio (NCO/COOH) of isocyanate to carboxyl group preferably is between 0.97 and 1.03, more preferably between 0.98 and 1.02.

When the equivalent weight ratio is less than 0.97, the polymerization degree does not increase and good mechanical properties cannot be obtained. When the equivalent weight ratio exceeds 1.03, polymerization becomes difficult.

In the polyamide copolymers of the present invention comprising repeating units represented by general formulae [I] and [II], $R_1$ and $R'_1$, which may be the same or different, each represents a hydrocarbon residue. As compounds capable of providing such a hydrocarbon residue, many compounds may be used. Organic diisocyanates,for instance, would be suitable. Representative examples of the organic diisocyanates are aromatic diisocyanates having 6 to 20 carbon atoms such as 4,4′-diphenylmethane diisocyanate, 2,4-tolylene diisocyanate, 2,6-tolylene diisocyanate, phenylene diisocyanate, 1,5-naphthylene diisocyanate, 3,3′-dichloro-4,4′-diphenylmethane diisocyanate, xylylene diisocyanate, tetramethylxylylene diisocyanate, etc.; aliphatic or alicyclic diisocyanates having 8 to 20 carbon atoms such as hexamethylene diisocyanate, isophorone diisocyanate, 4,4′-dicyclohexylmethane diisocyanate, etc.

Preferably, $R_1$ and $R'_1$ are aromatic hydrocarbon residues having 6 to 20 carbon atoms if the polyamide copolymers are to possess improved mechanical and physical properties and heat resistance.
Aromatic hydrocarbon residues represented by the general formulae are preferred particularly:

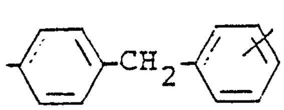
,
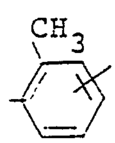

$R_1$ and $R'_1$ may be one or more hydrocarbon residues.

In the general formula [I], $R_2$ represents a hydrocarbon residue. As compounds capable of providing $R_2$ many compounds are suitable. Representative examples are dicarboxylic acids. Specific examples include aliphatic dicarboxylic acids having 4 to 54 carbon atoms such as glutaric acid, adipic acid, azelaic acid, pimelic acid, sebacic acid, dodecanedioic acid, tetradecanedioic acid, a dimeric acid, etc.; aromatic dicarboxylic acids having 8 to 20 carbon atoms such as isophthalic acid, terephthalic acid, phthalic acid, naphthalene dicarboxylic acid, etc. $R_2$ preferably means aliphatic hydrocarbon residues instead of aromatic hydrocarbon residues, if processability is to be improved.

Moreover $R_2$ may be one or more hydrocarbon residues.

In the general formula [II], A is a segment containing at least one of the repeating units represented by general formulae [III] through [VI]. The polyamide copolymers must contain at least 10 mol%, preferably 20 mol% or more of repeating units represented by the general formula [II]. With less than 10 mol%, the object of the present invention cannot be adequately achieved. There is no particular upper limit of the content of units [II] but said content is preferably less than 60 mol%, more preferably less than 50 mol%. As the content of units [II] in the polyamide copolymers increases, heat resistance becomes poor while softness and processability are improved.

Unit [III] is a unit derived from polyesters obtained from 2-methyl-1,8-octanediol and dicarboxylic acids. Unit [IV] is a unit derived from polyesters obtained from 3-methyl-1,5-pentanediol and dicarboxylic acids.

In general, polyesters containing units represented by the general formula [III] or [IV] can be prepared from diols or ester forming derivatives thereof and dicarboxylic acids or ester forming derivatives thereof; for the sake of brevity, they are simply referred to hereinafter as diols and dicarboxylic acids.

Many dicarboxylic acids are suitable for the purposes of the present invention. Examples are aliphatic dicarboxylic acids and aromatic dicarboxylic acids. Examples of aliphatic dicarboxylic acids include dicarboxylic acids having 4 to 54 carbon atoms such as glutaric acid, adipic acid, azelaic acid, pimelic acid, sebacic acid, dodecanedioic acid, tetradecanedioic acid, a dimeric acid, etc. Examples of the aromatic dicarboxylic acids are dicarboxylic acids having 8 to 20 carbon atoms such as isophthalic acid, terephthalic acid, phthalic acid, naphthalene dicarboxylic acid, etc. The aliphatic dicarboxylic acids, especially aliphatic dicarboxylic acids having 4 to 12 carbon atoms are preferred. These carboxylic acids may be used alone or in combination.

Segment A may also contain repeating units of polyesters other than units [III] or [IV]. These may be polyester units obtained from the same dicarboxylic acids as those making up the aforesaid units [III] or [IV] and other diols or may be polyester units quite different therefrom.

Preferred examples of the other diols are aliphatic or alicyclic diols such as ethylene glycol, propylene, glycol, 1,4-butanediol, 1,6-hexanediol, 1,9-nonanediol, 1,4-cyclohexandediol, etc.

In the present invention, the polyesters containing repeating units [III] or [IV] can be prepared in a known manner. However, in order to prepare the polyamides of the present invention, the polyesters may contain reactive groups, for example, carboxyl groups, etc. at both their ends. Such polyesters containing carboxyl groups at their ends (carboxyl-telechelic polyesters) can be obtained, for instance, by reacting an excess of the aforesaid dicarboxylic acid with a diol component including 3-methyl-1,5-pentanediol. Alternatively, it is also possible to obtain the polyesters by reacting a polyester diol containing hydroxy groups at both its ends with a dicarboxylic acid or its anhydride.

In the present invention, segment A may contain additional units other than those described above, which do not impair the effects of the present invention. These units may be polyester units containing polyalkylene glycols, for example, polyethylene glycol, polytetramethylene glycol, etc. as the diol component.

For preparing the polyester, a polycondensation catalyst may be used. The catalyst for the polycondensation may be chosen from a large group of compounds. Examples are titanium compounds such as tetramethoxytitanium, tetraethoxytitanium, tetra-n-propoxytitanium, tetraisopropoxytitanium, tetrabutoxytitanium, etc.; tin compounds such as di-n-butyl tin oxide, di-n-butyl tin dilaurate, dibutyl tin diacetate, etc.; combinations of acetates of magnesium, calcium, zinc, etc. and antimony oxide or the titanium compounds described above, etc. These catalysts are preferably employed in a range of 5 to 500 ppm based on the whole copolymer polyesters.

If slight coloration is to be avoided or ester exchange is to be prevented, it is better not to use these catalysts.

In the present invention, the content of unit [III] or [IV] preferably is 50 mol% or more. However, in the case of unit [III], the effects of the invention can be achieved with a small amount. An amount of unit [III] in segment A of 5 mol% or more preferably 10 mol% or more,may be sufficient.

Furthermore if segment A contains units [III], particularly advantageous results can be obtained when the polyester unit shown by formula [III] is used in combination with the polyester unit comprising other diols having 6 to 12 carbon atoms. Examples of these diols are aliphatic or alicyclic diols such as 1,6-hexanediol, 3-methyl-1,5-pentanediol, 1,9-nonanediol, 1,4-cyclohexanediol, etc.

If such diols are combined, the ratio of unit [III] to other polyester units in segment A preferably ranges from 10/90 to 60/40. In particular, a polyester unit represented by the general formula [X] and obtained from 1,9-nonanediol and a dicarboxylic acid imparts, when present in an amount within the above range, to the polyamide improved properties, such as low temperature characteristics, resistance to hydrolysis and heat aging resistance.

$$-\!\left[ O\!\left(CH_2\right)_9\!-O-\overset{\overset{\displaystyle O}{\|}}{C}-R'_3-\overset{\overset{\displaystyle O}{\|}}{C}\right]\!- \qquad [X]$$

$R'_3$ is a hydrocarbon residue which is the same as or different from $R_3$ described above.

2-Methyl-1,8-octanediol which is the diol component in formula [III] is often obtained in the form of a mixture

as a byproduct of 1,9-nonanediol. Accordingly, when a source yielding segment A of the polyester containing polyester unit [III] having 2-methyl-1,8-octanediol as a component and polyester unit [X] having 1,9-nonanediol as a component is prepared, it is preferred to use the mixture directly.

In the present invention, unit [V] is a unit derived from a polyester obtained by ring opening polymerization of β-methyl-δ-valerolactone. Furthermore, segment A may also contain units of polyesters obtained by ring opening polymerization of lactones other than β-methyl-δ-valerolactone. Other lactones may be, for example, β-propiolactone, pivalolactone, δ-valerolactone, ε-caprolactone, methy-ε-caprolactone and δ-caprolactone.

In the present invention, the content of unit [V] in segment A preferably is 30 mol% or more. As the unit [V] content decreases, processibility, resistance to hydrolysis and transparency become poor.

The polyesters containing units [V] can be prepared by ring opening polymerization of lactones In a conventional manner. For example, lactones can be subjected to ring opening polymerization in the presence or absence of a catalyst using a compound containing active hydrogen atoms such as ethylene glycol, etc. as an initiator. Further, the ring opening polymerization can be performed without using any initiator. However, the two ends of the polyesters obtained will vary depending on whether or not an initiator is used in the polymerization.

These polyesters can be reacted with organic diisocyanates or the like in the form of, for example, carboxyl-telechelic polymers to produce the polyamide copolymers of the present invention.

In the present invention, unit [VI] is a divalent group obtained by removing the telechelic carboxyl groups from carboxyl-telechelic polycarbonates containing the following unit:

$$-\left(\overset{O}{\overset{\|}{C}}-O-R_4-O\right)-$$

The structure of such polycarbonates is represented, for example, by the general formula [VII] :

$$-R_5-\overset{O}{\overset{\|}{C}}-O-R_4-O-\left[\left(\overset{O}{\overset{\|}{C}}-O-R_4-O\right)_{\ell}\overset{O}{\overset{\|}{C}}-R_6\right]_m\overset{O}{\overset{\|}{C}}-O-R_4-O\left(\overset{O}{\overset{\|}{C}}-O-R_4-O\right)_n\overset{O}{\overset{\|}{C}}-R_5- \qquad [VII]$$

wherein $\ell$ represents 0 or an integer of 1 to 100, m represents 0 or an integer of 1 to 100, n represents 0 or an integer of 1 to 100; $R_4$, $R_5$ and $R_6$, which may be the same or different, each represent a hydrocarbon residue; provided that when m is 1 or more, $\ell$ and n are not 0 at the same time and when m is 2 or more, $\ell$ is not 0.

In formula [VII] described above, $R_4$ is a hydrocarbon residue from the diol in the polycarbonate. The diol used in the present invention may be one conventionally used for preparing polycarbonates and polyesters. Examples include aliphatic diols having 2 to 16 carbon atoms, for example, ethylene glycol, 1,4-butanediol, 2-methyl-1,3-propanediol, neopentylglycol, 3-methyl-1,5-pentanediol, 1,6-hexanediol, 2,2-diethyl-1,3-propanediol, 2-ethyl-1,3-hexanediol, 3,3′-dimethylolheptane, 1,9-nonanediol, 2-methyl-1,8-octanediol, 1,10-decanediol, etc. These diols may also be used as admixture of two or more.

However, when linear diols such as 1,4-butanediol, 1,6-hexanediol, 1,9-nonanediol, etc. are used as the diol components of polycarbonates, low temperature characteristics are impaired because polycarbonates per se have a high solidifying point.

In order to improve the low temfperature characteristics, it is preferred that branched aliphatic diols having 2 to 16 carbon atoms such as 3-methyl-1,5-pentanediol, 2-methyl-1,3-propanediol, 3,3′-dimethylolheptane, etc. are used together with linear dils having 2 to 16 carbon atoms such as 1,4-butanediol, 1,6-hexanediol, 1,9-nonanediol, etc. When 2-methyl-1,8-octanediol and 1,9-nonanediol are employed in a molar ration of 5/95 to 80/20, the low temperature characteristics, resistance to hydrolysis and heat aging resistance of polyamides obtained are particularly improved.

In the present invention, the effects can be achieved by incorporating at least 30 mol% of unit [VI] in segment A.

The polycarbonates which can be used in the present invention are those containing carboxyl groups at both their ends. The method for preparing such polycarbonates may be a conventional method.

The known method in which polycarbonate diols are prepared first and then their ends are converted into carboxyl groups could, for instance be used.

The method for preparing the polycarbonate diols is not critical.

For example, the polycarbonate diols can be prepared by reacting glycols and carbonate compounds in an inert gas with heating under reduced pressure. Examples of the carbonate compounds which can be used are diphenyl carbonate, diethyl carbonate, ethylene carbonate, propylene carbonate, etc.

The catalyst for polycondensation which is used for the preparation of the polycarbonates may be chosen from a large number of compounds, for instance the same catalysts as used for the preparation of polyesters of [III] or [IV] described above may be employed. It is preferred that these catalysts be employed in a range of 5 to 500 ppm based on the whole polycarbonates.

Another suitable method comprises reacting diols with phosgene or a chloroformate.

The method for converting the terminal polycarbonate diols into carboxyl groups may be a conventional one. For example, polycarbonates having hydroxy groups at their ends are reacted with acid anhydrides such as succinic anhydride, phthalic anhydride, etc. while heating to thereby convert the hydroxyl groups into terminal carboxyl groups. According to another method, the polycarbonates having hydroxy groups at their ends are reacted with organic dicarboxylic acids while undergoing dehydration under heating whereby the hydroxyl groups are converted into terminal carboxyl groups.

In the general formula [VIII], $R_5$ represents a divalent hydrocarbon residue. Concretely, aliphatic hydrocarbon residues having 2 to 16 carbon atoms and/or aromatic hydrocarbon residues having 6 to 16 carbon atoms are preferred. Suitable compounds capable of yielding these residues are dicarboxylic acids such as adipic acid, azelaic acid, etc., in addition to succinic anhydride and phthalic anhydride described above.

In the general formula [VIII], $R_6$ is derived from organic dicarboxylic acids. Many organic dicarboxylic acids are suitable for the purposes of the invention. Examples are aliphatic dicarboxylic acids and aromatic dicarboxylic acids. Examples of aliphatic dicarboxylic acids include dicarboxylic acids having 4 to 54 carbon atoms such as glutaric acid, adipic acid, azelaic acid, pimelic acid, sebacic acid, deodecanedioic acid, tetradecanedioic acid, a dimeric acid, etc. Examples of aromatic dicarboxylic acids are dicarboxylic acids having 8 to 20 carbon atoms such as isophthalic acid, terephthalic acid, phthalic acid, naphthalene dicarboxylic acid, etc. The aliphatic dicarboxylic acids, especially aliphatic dicarboxylic acids having 4 to 12 carbon atoms are preferred. These carboxylic acids may be used alone or in combination.

In the present invention, the units represented by the general formulae [III] through [VI] may be present in segment A alone or in combination with units [III] through [VI].

Further, in the present invention, the molecular weight of segment A preferably ranges from 300 to 8,000, more preferably from 500 to 5,000. When the molecular weight is less than 300, processibility becomes poor and when it exceeds 8,000, transparency and dynamic efficiency are reduced.

The number average molecular weight of the polyamide copolymers according to the present invention is in a range of 5,000 to 250,000, preferably 20,000 to 150,000. When the molecular weight is less than 5,000, strength properties, flexing resistance and abrasion resistance are poor and when it exceeds 150,000, processibility is impaired.

Further, it is a characteristic feature of the present invention, that a higher degree of resistance to hydrolysis and heat aging resistance can be achieved by incorporating compounds containing at least one epoxy ring (epoxy compounds) into the polyamide copolymers described above and reacting them with each other, whereby compression set can be improved at the same time.

Such a characteristic feature may also be obtained by incorporating the epoxy compounds into conventional polyamides but in combination with the specific polyamides of the present invention, this characteristic feature is markedly improved.

The compounds containing epoxy rings are not particularly limited as long as they are compounds having at least one epoxy ring in the molecle. Representative examples of the epoxy compounds are monofunctional epoxy compounds such as phenyl glycidyl ether, styrene oxide, etc.; polyfunctional epoxy compounds such as ethyleneglycol diglycidyl ether, diethyleneglycol diglycidyl ether, propyleneglycol diglycidyl ether, bisphenol A diglycidyl ether, trimethylolpropane triglycidyl ether, glycerol triglycidyl ether, etc. These epoxy compounds may be used alone or as mixtures of two or more.

It is preferred that the amount of the epoxy compounds to be incorporated be approximately 0.2 to 15 wt% based on the polyamide. When the amount is less than 0.2%, other properties, for example, compression set, heat aging resistance and mechanical properties are not improved while resistance to hydrolysis can be improved. When more than 15 weight% difunctional epoxy compounds are employed, an increase in the molecular weight of the polyamide is noted, which is preferred in view of the mechanical properties but when the amount of difunctional epoxy compounds is too high various physical properties are impaired.

More preferably, the amount of the epoxy compound to be incorporated is 1 to 10 wt% in the case of monofunctional epoxy compounds and 0.2 to 3 wt% in the case of polyfunctional epoxy compounds. If monofunctional epoxy compoundsand the polyfunctional epoxy compounds are used in combination, the ratio of polyfunctional epoxy compounds to monofunctional epoxy compounds is preferably approximately 20/100 or less. Particularly when the ratio is in a range of approximately 2/100 to 20/100, better results are noted in compression set, resistance to hydrolysis, heat aging resistance and mechanical properties.

The reaction between the polyamides and the epoxy compounds may be carried out, once the polyamides and the epoxy compounda re well mixed with each other, by incorporating the epoxy compounds into the fused polyamide copolymer or by incorporating the epoxy compounds into a solution of the polyamides.The reaction temperature may be chosen from various ranges depending on whether the reaction is carried out in solution or in a fused state. For example, in the reaction in solution the temperature is preferably 100°C or higher and in the fused state, the temperature may be higher than the melting point of the polyamide used. Further, the reaction may be carried out either in the presence or absence of a catalyst.

The epoxy compound may be incorporated any time after a later stage of the polymerization of the polyamide. For example, it is possible to perform melt molding while incorporating the epoxy compound, at the time when the polyamide pelletized after completion of the polymerization is subjected to fabrication. The term "later stage of the polymerization" as used herein refers to a stage subsequent to the point of time when the organic diisocyanate component and the dicarboxylic acid component have disappeared by approximately

90%, preferably 95%. However, if the epoxy compound is incorporated at a time when polymerization does not proceed sufficiently, resistance to hydrolysis is not improved so that good results cannot be obtained.

The method for preparing the modified polyamide may be a conventional one. However, in order to prepare the modified polyamide efficiently, the following method is preferably used.

Thus, the preferred method for preparing the desired modified polyamides comprises using a multi-screw extruder reactor as a reaction device, continuously feeding the organic diisocyanate component and the dicarboxylic acid component into the reactor, allowing polymerization to proceed while eliminating by-produced carbon dioxide gas by heating under reduced pressure, continuously adding the epoxy compound at a later stage of the reaction and reacting them with each other.

The reaction intermediate formed in the polyamide reaction has a great tackiness to metals, resulting in uneven mixing in the reactor so that the intermediate causes the formation of gelled polyamide products. For the purposes of the present invention a co-rotating multi-screw extruder reactor equipped with an intermeshing screw including a kneading element is therefore preferably used as multi-screw extruder reactor.

The residence time in such a reactor is mainly determined by the L/D value (wherein L is the screw length and D is the screw diameter). The greater the L/D value, the longer the residence time. However, the L/D value has an upper limit. It is restricted by two factors: the strength of the screw shaft and the motor drive power load of the screw. When the residence time is 2 to 3 minutes, the reactor works most economically.

On the other hand, in order to obtain excellent modified polyamide copolymers, the reaction time should preferably be as long as possible (generally about 5 minutes). Therefore, if only one conventional multi-screw extruder reactor with a residence time of 2 to 3 minutes is used, it is difficult to obtain the modified polyamide copolymers of the present invention efficiently. Accordingly, in the present invention, it is important that two or more multi-screw extruder reactors be connected in series to ensure sufficient residence time.

The first reactor mainly serves to accelerate polymerization while preventing the reactive substance from adhering to the screw and to eliminate any carbon dioxide generated. For this reason, it is preferred to use a co-rotating multi-screw having excellent intermeshing properties. In order to accelerate the reaction, mixing is preferably performed with a screw rotator equipped with a kneading element having an excellent mixing effect at a high speed of 100 rpm, preferably 200 rpm. Elimination of carbon dioxide is achieved with a progressive screw portion having vent holes. The vent holes are preferably kept under reduced pression by a vacuum pump. Preferably, 80% or more of the carbon dioxide are removed in the first reactor. When the amount is less than 80%, the amount of carbon dioxide to be removed in the second and subsequent reactors becomes too large so that subsequent polymerization or epoxydation do not proceed efficiently.

The second and subsequent reactors mainly serve to eliminate the remaining carbon dioxide and to complete the polymerization and reaction with the epoxy compound. The subsequent reactors are not limited in number, but preferably, there is only one. Of course, one reactor simplifies the controlling of the production process. The amount of carbon dioxide gas to be removed from the subsequent reactors is small so that it may be sufient to provide several vent holes. A vacuum pump is never necessary.

A the time when the amount of the dicarboxylic acid consumed reaches about 90%, preferably 95% or more, the epoxy compound is preferably fed in to modify the polyamide. If the epoxy compound is added when polymerization does not proceed sufficiently, the dicarboxylic acid, which is a starting material of the polyamide, reacts with the epoxy compound so that it is not possible to obtain a polyamide having a high polymerization degree or excellent modified properties.

In the first reactor and the subsequent reactors, the screw element combination and reaction temperature are both important factors. The kneading element portion makes up 10 to 50%, preferably 20 to 40%, of the whole screws. Where it is 10% or less, mixing is insufficient. As a result, gelled products are produced in large quantities and the epoxy compound is not homogeneously mixed so that it is difficult to obtain the objective product. On the other hand, when the portion exceeds 50%, strike-through and extrusion of the reactive substances become difficult or the removal of carbon dioxide is insufficient and it is then likewise difficult to obtain the objective product.

With respect to the reaction temperature, it is preferred to control 5 or more sections independently in each reactor. The temperature of each section is preferably in the range of (T + 20) °C to (T + 70) °C wherein the flow initiation temperature of the reacting matters present is T° C. When the temperature is lower than (T + 20) °C, the reactive substances are not in a molten state. As a result, mixing is not thorough and the product obtained does not have a minimum gel content. When the temperature is higher than (T + 70) °C, thermal decomposition begins so that it is not possible to obtain a product having excellent physical properties. The flow initiation temperature as used herein refers to a temperatures at which the substances show fluidity when looked at with the naked eye.

The polyamide copolymersof the present invention show excellent processibility and heat resistance and can be easily molded by an injection molding machine, an extrusion molding machine, a blow molding machine, etc. The polyamide copolymers can be used for preparing sheets, films, tubular hosepipes, roll gears, packing materials, insulation materials, belt laminate products, automobile parts, sporting goods, etc.

Additives such as colorants, fillers, antioxidants, ultra-violet light absorbers and/or lubricants may be added to the polyamide copolymers of the invention. The present invention will be specifically described hereinafter with reference to the examples. In the examples, "parts" are all "parts by weight". Tensile strength was measured by punching a film having a thickness of 100 μm obtained by hot press at 270° C with a dumbbell. Resistance to hydrolysis was evaluated by jungle test. The jungle test was evaluated by the tensile strength

keeping rate before and after the jungle test of a film having a thickness of 100 µm which had been kept at 70°C under a relative humidity of 95%. Heat aging resistance was evaluated by a keeping rate obtained by measuring the tensile strength of a film having a thickness of 100 µm which had been kept in a gear oven at 150°C for 5 days. The temperature dependency of the melt flow property was evaluated by activated energy Ea (kcal/mol) of an apparent melt flow obtained by measuring the viscosity according to the temperature elevation method (hold, 185°C x 5 mins.; a temperature elevation rate, 5°C/min.; dice diameter x length = 0.5 mmØ x 5 mml; load, 20 kg) using a hardening type flow tester, Model CFT-500, manufactured by Shimadzu Seisakusho, Ltd. The activated energy Ea (kcal/mol) of an apparent melt flow was calculated, after plotting a logarithm of a flow amount ratio in correlation to an absolute temperature, to the reciprocal number of the absolute temperature and determining its slope, by the following equation:

$Ea = -2.303\ R.K$

wherein R represents the gas constant (1.987 cal/deg.mol).

The low temperature characteristics, were evaluated by preparing a test piece from a film having a thickness of 0.2 mm of the copolymer of the present invention and measuring $T_\alpha$ (°C) with a direct reading type dynamic viscoelasticity measuring device, Vibron Model DDV-II (110 HZ) made by Toyo Sokki K.K.

To evaluate transparency, polyamide sheets having a thickness of 10 mm were provided with characters. Sheets through which the characters are clearly legible, poorly legible and hardly legible were rated as "A", "B" and "C", respectively.

Compression set was measured at 70°C in accordance with ASTM D395.

Synthesis Example 1

Into a reactor were charged 2.400 g (15.0 mols) of 2-methyl-1,8-octanediol and 2.781 g (19.05 mols) of adipic acid and esterification was initiated at 150°C with stirring. The temperature was gradually elevated to 200°C over about 3 hours to complete the esterification. At this stage, water was distilled out. Then, the reaction was accelerated while gradually reducing the pressue in the system. At the time when terminal hydroxy groups had almost disappeared, the reaction was terminated to give a carboxy-telechelic polyester No. 1. As a result, the acid value was 112 KOH mg/g and the average molecular weight determined from the acid value was 1,000.

Furthermore, the $^1H$ nuclear magnetic resonance spectrum was measured in a chloroform-d solvent. Based on a standard of tetramethylsilane (TMS) as a control compound, resonance peaks were detected for hydrogen in the methyl group of 2-methyl-1,8-octanediol at 0.8 ppm, for hydrogen in the methylene group adjacent to the oxygen atom of 2-methyl-1,8-octanediol at 3.9 ppm and for hydrogen in the methylene group adjacent to the -C=O group of adipic acid at 2.2 ppm.

Furthermore, carboxyl-telechelic polyesters Nos. 2 through 10 described in Table 1 were obtained in a manner similar to the procedures described above.

Synthesis Example 2

Carboxyl-telechelic polyester No. 11 was obtained in a manner similar to that of Synthesis Example 1 except that 3-methyl-1,5-pentanediol was used as the diol component. As a result, the acid value was 114.5 KOH mg/g and the average molecular weight determined from the acid value was 980. Furthermore, the $^1H$ nuclear magnetic resonance spectrum was measured in chloroform-d solvent. Based on a standard of tetramethylsilane (TMS) as a control compound, resonance peaks were detected for hydrogen in the methyl group of 3-methyl-1,5-pentanediol at 0.8 ppm, hydrogen in the methylene group adjacent to the oxygen atom of 3-methyl-1,5-pentanediol at 3.9 ppm, for hydrogen in the methylene group adjacent to the carbonyl group of adipic acid at 2.2 ppm, and for hydrogen at the terminal carboxylic acids at 11.8 ppm.

Further carboxyl-telechelic polyesters Nos. 12 through 13 described in Table II were obtained in a manner similar to the procedures described above.

Synthesis Example 3

A 500 ml 3-necked flask equipped with a stirrer, a dropping funnel, an outlet and an inlet was flushed with dry nitrogen gas.

Then 12.4 parts (0.2 mols) of ethylene glycol and 0.13 parts of butyl lithium were charged into the flask. While vigorously stirring,150 parts of β-methyl-δ-valerolactone were added to the mixture through the dropping funnel at once. After one hour, 200 g of water was added to stop the reaction. To the reaction mixture was added 200 g of toluene. After separating water by fractionation, the system was washed 3 times with water. Toluene and trace amounts of water were distilled off to give a viscous liquid. The liquid was charged into a separate 500 ml flask together with 200 g of toluene and 42 g (0.42 mols) of succinic anhydride. The mixture was heated to 100°C while stirring. The reaction was completed after 4 hours. Toluene was distilled off and the product was further purified by molecular distillation to give carboxyl-telechelic polyester No. 14. The acid value was 106.7 KOH mg/g, the OH value was 0.2 KOH mg/g and the average molecular weight determined therefrom was 1050.

Further, the $^1H$ nuclear magnetic resonance spectrum was measured in chloroform-d solvent. Based on a standard of tetramethylsilane (TMS) as a control compound, the resonance peaks for hydrogen in the methyl group of β-methyl-δ-valerolactone was detected at 0.9 ppm, for hydrogen in the methylene group adjacent to the carbonyl group of β-methyl-δ-valerolactone at 2.2 ppm, for hydrogen in the methylene group adjacent to the oxygen atom other than the carbonyl group at 4.1 ppm and for hydrogen at the terminal carboxylic acids at

11.0 ppm.

Carboxyl-telechelic polyesters Nos. 15 and 16 described in Table II were obtained in a manner similar to the procedures described above.

Synthesis Example 4

In a flow of nitrogen, a mixture of 1534 g (13 mols) of 1,6-hexanediol and 1568 g (12 mols) of diphenyl carbonate was heated and phenol was distilled at 190° C out of the reaction system. After most of the phenol was distilled off by gradually elevating the temperature to 210 to 220° C, the system was evacuated. The remaining phenol was completely distilled off at 210 to 220° C at a pressure of 6 to 10 mmHg. A polycarbonate diol showing an OH value of 62 KOH mg/g was obtained. Into a flask were charged 1800 g of this polycarbonate diol and 210 g of succinic anhydride. The mixture was heated to to 100° C while stirring. The reaction was completed after 4 hours. The reaction mixture was purified by molecular distillation to give carboxyl-telechelic polyester No. 17. The acid value was 56 KOH mg/g and the average molecular weight determined therefrom was 2000.

Carboxyl-telechelic polyesters Nos. 18 through 23 described in Table III were obtained in a manner similar to Synthesis Example 4.

Synthesis Example 5

In a flow of nitrogen,a mixture of 1,770 g (15 mols) of 1,6-hexanediol and 2,140 g (10 mols) of diphenyl carbonate was heated and phenol was distilled at 190° C out of the reaction system. After most of the phenol was distilled off by gradually elevating the temperature to 210 to 220° C, the system was evacuated. The remaining phenol was completely distilled off at 210 to 220° C at a pressure of 6 to 10 mmHg. A polycarbonate diol showing an OH value of 276 KOH mg/g was obtained. In a flow of nitrogen, 2,030 g of this polycarbonate diol, 2,190 g of adipic acid and 0.5 g of tetraisopropoxy titanate as a catalyst were heated at 200° C for 5 hours. The reaction was completed under a final reduced pressure of 1 mmHg to give carboxyl-telechelic polyester No. 24. The acid value was 95.9 KOH mg/g and theaverage molecular weight determined therefrom was 1,170.

Carboxyl-telechelic polyester No. 25 described in Table III was obtained in a manner similar to Synthesis Example 5.

Table I

| Carboxyl-Telechelic Polyester | | Synthesis Example No. 1 | No. 2 | No. 3 | No. 4 | NO. 5 | No. 6 | NO. 7 | No. 8 | No. 9 | No. 10 |
|---|---|---|---|---|---|---|---|---|---|---|---|
| Dicarboxylic Acid (mol%) | ADA | 100 | 100 | | | 100 | 100 | 100 | 100 | 5 | 5 |
| | AZA | | | 100 | 100 | | | | | 95 | 95 |
| Diol (mol%) | MOD | 100 | 40 | 100 | 60 | 20 | 50 | | | | |
| | ND | | 60 | | 40 | 80 | 30 | | | | |
| | MPD | | | | | | 20 | | | | |
| | HD | | | | | | | 100 | | | |
| | BD | | | | | | | | 100 | | 100 |
| | NPG | | | | | | | | | 100 | |
| Molecular Weight | | 1000 | 1200 | 1200 | 1200 | 1200 | 1000 | 1030 | 1200 | 2200 | 2350 |

Notes)

ADA: adipic acid
AZA: azelaic acid
MPD: 3-methyl-1,5-pentanediol
BD: 1,4-butanediol
MOD: 2-methyl-1,8-octanediol
ND: 1,9-nonanediol
HD: 1,6-hexanediol
NPG: neopentyl glycol

Table II

| Carboxyl-Telechelic Polyester | | Synthesis Example No. 11 | No. 12 | No. 13 | No. 14 | No. 15 | No. 16 |
|---|---|---|---|---|---|---|---|
| Polycondensation System | | | | | | | |
| Dicarboxylic Acid (mol%) | ADA | 100 | 100 | | | | |
| | AZA | | | 100 | | | |
| Diol (mol%) | MPD | 100 | 75 | 100 | | | |
| | HD | | 25 | | | | |
| Ring-Opening Polymerixation System | | | | | | | |
| | MVL (mol%) | | | | 100 | 60 | |
| | CL (mol%) | | | | | 40 | 100 |
| Molecular Weight | | 980 | 1010 | 1000 | 1050 | 1000 | 1050 |

Abbreviations:

CL: ε-caprolactone

MVL: ß-methyl-δ-valerolactone

Table III

| | | Synthesis Example | | | | | | | | |
|---|---|---|---|---|---|---|---|---|---|---|
| | | No. 17 | No. 18 | No. 19 | No. 20 | NO. 21 | No. 22 | No. 23 | No. 24 | No. 25 |
| Carboxyl-Telechelic PC | | | | | | | | | | |
| PC Diol | | | | | | | | | | |
| Glycol (mol%) | MOD | | | 50 | 20 | | 80 | | | 10 |
| | ND | | 100 | 50 | 80 | | 20 | 60 | | 90 |
| | HD | 100 | | | | 95 | | | 100 | |
| | MPD | | | | | 5 | | 40 | | |
| Molecular Weight | | 800 | 1050 | 1000 | 950 | 1100 | 1350 | 1050 | 400 | 530 |
| Carboxylic Acid (mol%) | SAH | 100 | 100 | 100 | 100 | | 100 | | | |
| | PAH | | | | | 100 | | 100 | | |
| | AZA | | | | | | | | | 100 |
| | ADA | | | | | | | | 100 | |
| Molecular Weight | | 2000 | 1250 | 1200 | 1050 | 1400 | 1550 | 1350 | 1170 | 1370 |

PC: polycarbonate
PAH: phthalic anhydride
SAH: succinic anhydride

Example 1

Into a beaker were charged 0.2 mols (200 g) of carboxyl-telechelic polyester prepared in Synthesis Example 1 and 0.3 mols (56.4 g) of azelaic acid. The mixture was heated to 120° C and the melt was dehydrated for 30 minutes under reduced pressure.

Then 125 g of (0.5 mols) of molten 4,4′-diphenylmethanediisocyanate was added to the mixture at once followed by vigorous stirring for about 20 minutes. By then, 70% of the isocyanate was used up.

The prepolymer obtained was charged into a plastograph (manufactured by Brabender Co.) kept at 260° C to accelerate polymerization. After kneading for 20 minutes, the mixture was removed to give copolymer No. 26. Measurement by GPC, showed that the block copolymer No. 26 obtained had a number average molecular weight of 40,200 (calculated as styrene). Various properties were evaluated. The results obtained are shown in Table IV.

The copolymers of the present invention obtained showed good results in respect of resistance to hydrolysis, tensile elongation, processability, heat aging resistance, transparency and low temperature characteristics.

Examples 2 to 18 and Comparative Examples 1 to 4

Copolymers Nos. 27 through 47 were obtained in a manner similar to that of Example 1 except for using compositions shown in Tables IV and V. The number average molecular weights of the copolymers obtained were 38,000 to 40,000. The different characteristics are evaluated. The results obtained are shown in Tables IV and V.

The copolymers obtained in Examples 2 through 18, gave good results as shown in Tables IV and V. However, the result obtained with carboxyl-telechelic polyesters containing no repeating units essential to the present invention (Comparative Examples 1 to 4), were not good. All physical properties, such as resistance to hydrolysis, low temperature characteristics, heat aging resistance, processability and transparency were poor.

Table IV

| Example | Copolymer | Organic Diisocyanate Component | Dicarboxylic Acid Component: Dicarboxylic Acid | Dicarboxylic Acid Component: Carboxyl-telechelic Polyester No. | Tensile Strength ($kg/cm^2$) | processibility: Apparent Activated Energy of Melt Flow (Kcal/mol) | Keeping Rate of Heat Aging Resistance Strength (%) | Keeping Rate of Hydrolysis Resistance Strength (%) | Low Temperature Characteristics $T_{\alpha}$ (°C) | Trance-parency |
|---|---|---|---|---|---|---|---|---|---|---|
| 1 | 26 | MDI | AZA | 1 | 520 | 30 | 100 | 97 | -45 | A |
| 2 | 27 | TDI | AZA | 1 | 500 | 26 | 100 | 97 | -43 | A |
| 3 | 28 | PDI | AZA | 1 | 530 | 33 | 100 | 97 | -47 | A |
| 4 | 29 | MDI | AZA | 2 | 500 | 30 | 100 | 96 | -43 | A |
| 5 | 30 | MDI | AZA | 3 | 510 | 30 | 100 | 96 | -52 | A |
| 6 | 31 | MDI | SbA | 4 | 500 | 30 | 100 | 98 | -54 | A |
| 7 | 32 | MDI | AZA/ADA* | 6 | 530 | 25 | 95 | 90 | -40 | A |
| 8 | 33 | MDI | AZA/ADA** | 2 | 520 | 25 | 100 | 98 | -42 | A |
| 9 | 34 | MDI | AZA | 5 | 540 | 33 | 98 | 97 | -43 | A |
| 10 | 35 | MDI | AZA/IPA*** | 2 | 525 | 32 | 100 | 98 | -43 | A |

AZA/ADA* = 7/3 (molar ratio)
MDI: 4,4'-diphenylmethane diisocyanate
TDI: tolylene diisocyanate
PDI: phenylene diisocyanate

AZA/ADA** = 1/1 (molar ratio)
Sba: sebacic acid
IPA: isophthalic acid

AZA/IPA*** = 7/3 (molar ratio)

Table V

| Example | Thermo-plastic Elas-tomer | Organic Diiso-cyanate Component | Dicarboxylic Acid Component: Aliphatic Dicarbo-xylic Acid | Dicarboxylic Acid Component: Carboxyl-teleche-lic Poly-ester No. | Tensile Strength ($kg/cm^2$) | Elon-gation (%) | process-ibility: Apparent Activated Energy of Melt Flow (Kcal/mol) | Keeping Rate of Heat Aging Resistance Strength (%) | Keeping Rate of Hydrolysis Resistance Strength (%) | Trance-parency |
|---|---|---|---|---|---|---|---|---|---|---|
| 11 | 36 | MDI | AZA | 11 | 490 | 470 | 30 | 96 | 70 | A |
| 12 | 37 | TDI | AZA | 11 | 500 | 480 | 32 | 98 | 69 | A |
| 13 | 38 | MDI | AZA | 12 | 520 | 480 | 33 | 97 | 68 | A |
| 14 | 39 | MDI | AZA | 13 | 470 | 445 | 26 | 95 | 72 | A |
| 15 | 40 | MDI | AZA/ADA* | 13 | 490 | 470 | 28 | 96 | 71 | A |
| 16 | 41 | MDI | AZA | 11/7** | 490 | 530 | 32 | 95 | 60 | A-B |
| 17 | 42 | MDI | AZA | 14 | 480 | 540 | 28 | 97 | 72 | A |
| 18 | 43 | MDI | AZA | 15 | 510 | 510 | 30 | 96 | 63 | A-B |
| Comparative Example | | | | | | | | | | |
| 1 | 44 | MDI | AZA | 7 | 480 | 500 | 46 | 93 | 30 | C |
| 2 | 45 | MDI | AZA | 16 | 485 | 480 | 48 | 93 | 34 | C |
| 3 | 46 | MDI | AZA/ADA*** | 10 | 475 | 500 | 66 | 90 | 25 | B |
| 4 | 47 | MDI | AZA/ADA*** | 9 | 480 | 450 | 60 | 94 | 45 | A |

AZA/ADA* = 7/3 (molar ratio) No. 11/No. 17** = 1/1 (molar ratio) AZA/ADA*** 1/1 (molar ratio)

Example 19

Into a beaker were charged 0.2 mols (200 g) of carboxyl-telechelic polycarbonate prepared in Synthesis Example 17 and 0.3 mols (56.4 g) of azelaic acid. The mixture was heated to 120°C The melt obtained was dehydrated for 30 minutes under reduced pressure. Then 125 g of (0.5 mols) of molten 4,4′-diphenylmethane-diisocyanate was added to the mixture at once followed by vigorous stirring for about 10 minutes.

The prepolymer obtained was charged into a plastograph (manufactured by Brabender Co.) kept at 260°C to accelerate polymerization. After kneading for 10 minutes, the mixture was removed to give a light yellow transparent rubbery substance No. 48. the inherent viscosity of this substance was 0.95 dl/g at 30°C in N-methyl-2-pyrrolidone. The number average molecular weight calculated as styrene was 80,600. In the infrared spectrum, this substance showed absorptions based on an amide group at 1650 $cm^{-1}$ and 1530 $cm^{-1}$ and adsorptions based on polycarbonate at 1760 $cm^{-1}$ and 1250 $cm^{-1}$. In the $^1H$ nuclear magnetic resonance spectrum, hydrogen in the amide group and hydrogen in the methylene group adjacent to the carbonate showed resonance peaks at 9.7 ppm and 4.0 ppm, respectively. It is noted that the rubbery substance obtained was a polycarbonate polyamide copolymer. The different properties were evaluated. The results obtained are shown in Table VI.

The polycarbonate polyamides showed good results in respect of resistance to hydrolysis, tensile strength, heat aging resistance, transparency and low temperature characteristics.

Examples 20 to 29

Copolymers Nos. 49 through 58 were obtained in a manner similar to that of Example 19 except for using compositions shown in Table VI. The number average molecular weights of the copolymers obtained were 60,000 to 90,000. The differenct characteristics were evaluated. The results obtained are shown in Table VI.

With respect to the copolymers obtained in Examples 20 through 29, good results were obtained in respect of all dynamic properties, heat aging resistance, resistance to hydrolysis and transparency. Moreover, the copolymers obtained in Examples 23, 24, 26 and 27 showed good results also in low temperature softness.

Example 30

Polycarbonate polyamide copolymer No. 59 having a molecular weight of 80,000 was obtained in a manner similar to that of Example 19 except that 0.1 mol (120 g) of carboxyl-telechelic polycarbonate No. 19 and 0.4 mols (75.2 g) of azelaic acid were used. The copolymers obtained had excellent tensile strength, heat aging resistance, resistance to hydrolysis and transparency as shown in Table VI.

Example 31

Polycarbonate polyamide copolymer No. 60 having a molecular weight of 85,000 was obtained in a manner similar to that of Example 19 except that 0.4 mols (480g) of carboxyl-telechelic polycarbonate No. 19 and 0.1 mol (18.8g) of azelaic acid were used. The copolymer obtained had excellent tensile strength, heat aging resistance, resistance to hydrolysis and transparency as shown in Table VI.

Table VI

| Example | Copolymer | Organic Diisocyanate Component | Dicarboxylic Acid Component (mol): Dicarboxylic Acid | Dicarboxylic Acid Component (mol): Carboxyl-telechelic Polycarbonate No. | Tensile Strength ($kg/cm^2$) | Keeping Rate of Heat Aging Resistance Strength (%) | Keeping Rate of Hydrolysis Resistance Strength (%)*** | Low Temperature Softness $T_{\alpha}$ (°C) | Tranceparency |
|---|---|---|---|---|---|---|---|---|---|
| 19 | 48 | MDI | AZA (0.3) | 17 (0.2) | 540 | 100 | 94 | -12 | A |
| 20 | 49 | TDI | AZA (0.3) | 17 (0.2) | 520 | 100 | 94 | -11 | A |
| 21 | 50 | PDI | AZA (0.3) | 17 (0.2) | 550 | 100 | 94 | -13 | A |
| 22 | 51 | MDI | SbA (0.3) | 18 (0.2) | 560 | 100 | 97 | -17 | A |
| 23 | 52 | MDI | AZA (0.3) | 19 (0.2) | 530 | 100 | 98 | -30 | A |
| 24 | 53 | MDI | AZA (0.3) | 20 (0.2) | 510 | 100 | 99 | -35 | A |
| 25 | 54 | MDI | AZA (0.3) | 21 (0.2) | 540 | 100 | 95 | -21 | A |
| 26 | 55 | MDI | AZA/ADA* (0.3) | 22 (0.2) | 550 | 100 | 99 | -32 | A |
| 27 | 56 | MDI | AZA (0.3) | 23 (0.2) | 545 | 100 | 98 | -27 | A |
| 28 | 57 | MDI | AZA (0.3) | 24 (0.2) | 550 | 97 | 89 | -19 | A |
| 29 | 58 | MDI | AZA/ADA* (0.3) | 25 (0.2) | 545 | 96 | 87 | -34 | A |
| 30 | 59 | MDI | AZA (0.4) | 19 (0.1) | 650 | 100 | 99 | -26 | A |
| 31 | 60 | MDI | AZA (0.1) | 19 (0.4) | 480 | 97 | 97 | -39 | A |
| Comparative Example 3 | 47 | MDI | AZA/ADA** (0.3) | 9 (0.2) | 480 | 90 | 15 | -22 | A |
| Comparative Example 4 | 46 | MDI | AZA/ADA** (0.3) | 10 (0.2) | 470 | 88 | 12 | -32 | B |

AZA/ADA* = 7/3 (molar ratio)
***: allowed to stand for 56 days
AZA/ADA** = -1/1 (molar ratio)

Example 32

Into a beaker were charged carboxyl-telechelic polyester (196 parts, 0.2 mols) prepared in Synthesis Example 2 and azelaic acid (56.4 parts, 0.3 mols). The mixture was heated to 120°C. The melt obtained was dehydrated for 30 minutes under reduced pressure. Then molten 4,4′-diphenylmethanediisocyanate (125 parts, 0.5 mols) was added to the mixture at once followed by vigorous stirring for about 20 minutes. By then, 70% of the isocyanate was used up.

The prepolymer obtained was charged into a plastograph (manufactured by Brabender Co.) kept at 260°C to accelerate polymerization. When 96% or more isocyanate and carboxylic acid were consumed about 10 minutes after being charged into the plastograph, phenyl glycidyl ether (19 parts) and Epicote 828 (manufactured by Shell Petrochemical Co., Ltd.) (2 parts) were added to the mixture. After kneading for 10 more minutes, the mixture was removed to give modified polyamide No. 61. The different properties were evaluated. The results obtained are shown in Table VII.

The modified polyamide obtained showed good results in respect of tensile strength, tensile elongation, compression set, resistance to hydrolysis and heat aging resistance, as is evident from Table VII.

Examples 33 through 37

Modified polyamides Nos. 33 to 37 were obtained in a manner similar to that of Example 19 except for using compositions and ratios show in Table VII. The results obtained with the modified polyamides of Examples 33 to 37, were as good as those obtained in Example 32 in respect of tensile strength, tensile elongation, compression set, resistance to hydrolysis and heat aging resistance.

Comparative Examples 5 through 8

Into a beaker were charged carboxyl-telechelic polyester (0.2 mols) shown in Table VII and dicarboxylic acid. (0.3 mols). The mixture was heated to 120°C. The melt obtained was dehydrated for 30 minutes under reduced pressure. Then molten 4,4′-diphenylmethanediisocyanate (0.5 mols) was added to the mixture at once followed by vigorous stirring for about 20 minutes. By then, 70% of the isocyanate was consumed.

The prepolymer obtained was charged into a plastograph (manufactured by Brabender Co.) kept at 260°C to accelerate polymerization. After kneading for 20 minutes, the mixture was removed to give various polyamides.

Each of the polyamides obtained was continuously charged into a twin screw extruder having 3 zones, i.e.a front, intermediate and rear zone. Phenyl glycidyl ether (5pHR) and Epicote 828 (0.5pHR) were continously fed into the extruder between the front and the intermediate zone. The temperature in the intermediate zone was set 240°C above the melting point of the polyamide. The polymer obtained was continuously extruded into a water bath as a strand and then converted into pellets with a pelletizer to give the modified polyamides Nos. 67 and 68. The products showed relatively good physical properties, although they were not superior to those obtained in Examples 33 through 37.

Table VII

| | Poly-amide | Organic Diiso-cyanate Compo-nent | Dicarbo-xylic Acid | Dicarboxylic Acid Component: Carboxyl-telechelic Polymer No. | Dicarboxylic Acid Component: Carboxyl-telechelic Polymer Molecular Weight | Epoxy Compound | Inherent Viscosity (dl/g) | Tensile Strength ($kg/cm^2$) | Elon-gation (%) | Compres-sion Set (%) | Keeping Rate of Hydrolysis Resistance Strength (%) | Keeping Rate of Heat Resistance Strength 5) (%) |
|---|---|---|---|---|---|---|---|---|---|---|---|---|
| Example | | | | | | | | | | | | |
| 32 | 61 | MDI | AZA | 11 | 980 | PGE 3) 5PHR, Epicoat 828, 0.5PHR | 0.83 | 530 | 480 | 38 | 88 | 98 |
| 33 | 62 | TDI | AZA | 11 | 980 | PGE 5PHR | 0.82 | 530 | 470 | 42 | 91 | 98 |
| 34 | 63 | MDI | AZA/ADA *1) | 11<br>cPHAZ 2) | 980<br>1020 | PGE 5PHR Epicoat 828, 0.5PHR | 0.83 | 530 | 480 | 39 | 87 | 96 |
| 35 | 64 | MDI | AZA | 2 | 1200 | PGE 3PHR | 0.90 | 500 | 530 | 40 | 90 | 97 |
| 36 | 65 | MDI | AZA | 14 | 1050 | PGE 5PHR Epicoat 828, 0.5PHR | 0.84 | 500 | 540 | 42 | 92 | 98 |
| 37 | 66 | MDI | AZA | 15 | 1000 | PGE 5PHR Epicoat 828, 0.5PHR | 0.82 | 540 | 500 | 40 | 90 | 97 |
| Comparative Example | | | | | | | | | | | | |
| 5 | 66 | MDI | AZA | cPHAZ | 1020 | PGE 5PHR EGDGE 4) 0.5PHR | 0.85 | 520 | 460 | 36 | 84 | 95 |
| 6 | 67 | MDI | AZA | cPHAZ | 1020 | PGE 5PHR | 0.77 | 510 | 455 | 43 | 83 | 95 |
| 7 | 68 | MDI | AZA | 7 | 1030 | PGE 5PHR | 0.81 | 550 | 520 | 39 | 85 | 95 |
| 8 | 69 | MDI | AZA/ADA *1) | — | — | PGE 5PHR | 1.2 | 750 | 110 | — | 99.0 | 99.5 |

1) AZA/ADA = 7/3 (molar ratio)
2) cPHAz: carboxyl-telechelic polyhexylene azelate
3) PGE: phenylglycidyl ether
4) EGDGE: ethyleneglycol diglycidyl ether
5) maintained for 10 days

Example 38

Into a storage tank kept at 90°C and equipped with a stirrer were charged 80.2 parts of polyester dicarboxylic acid having a mean molecular weight of 1143 obtained from 3-methyl-1,5-pentandiol and adipic acid and 19.8 parts of azelaic acid. The mixture was mixed in a nitrogen atmosphere to give a fully transparent dicarboxylic acid mixture.

Separately, 4,4′-diphenylmethane diisocyanate was charged into a storage tank kept at 50°C and stored in a nitrogen atmosphere.

The dicarboxylic acid mixture at 90°C was continuously fed into an intermeshing twin screw extruder reactor equipped with a kneading element (manufactured by Reasearch Laboratories of Plastic Technology Corp.) at a rate of 69.5 g/min. with a metering pump having a rotation accuracy of ± 2/1000.

On the other hand, 4,4′-diphenylmethane diisocyanate heated to 50°C was continuously fed into the reactor at a rate of 30.5 g/min. with a metering pump having a rotation accuracy of ± 2/100.

As a polyamide modifying agent, 4 parts of phenyl glycidyl ether were added through a vent hole (section 4) of a second reactor in which 95% or more isocyanate and carboxylic acid were estimated to be used up.

The reactor consisted of two screw extruder reactors connected with each other in series, which were both intermeshing co-rotating twin screw extruders including kneading elements.

Both reactors has a screw diameter (D) of 30 mm and a screw length (L) of 1080 mm. The portion of the kneading elements was 23% in the first reactor and 34% in the second reactor.

Each reactor was divided into 6 sections which were numbered 1 to 6, counted from the opening through which the starting material was fed in. Sections 3, 4, 5 and 6 of the first reactor are vent holes to remove $CO_2$. In the second reactor, section 3 is a vent hole to remove $CO_2$, section 4 is an opening for charging the epoxy compound and section 6 is a vent hole to remove all gases.

The zone in which the reaction is completed, was a zone with a nozzle having a diameter of 3.0 mm. The reaction temperature is as shown in Table VIII.

Table VIII

| Section | 1 | 2 | 3 | 4 | 5 | 6 |
|---|---|---|---|---|---|---|
| First Reactor | 170 | 220 | 280 | 280 | 280 | 270°C |
| Second Reactor | 220 | 240 | 280 | 280 | 280 | 250°C |

Rotation number of screw : 250 rpm (in both reactors)

Example 39

Into a storage tank kept at 90°C and equipped with a stirrer were charged 60.6 parts of polyester dicarboxylic acid having a mean molecular weight of 987 obtained from 3-methyl-1,5-pentandiol and adipic acid and 39.4 parts of azelaic acid. The mixture was mixed in a nitrogen atmosphere to give a fully transparent dicarboxylic acid mixture. This dicarboxylic acid mixture and 4,4′-diphenylmethane diisocyanate were continuously fed in at rotation rates of 89.4 g/min. and 60.6 g/min., respectively and were otherwise treated in a manner similar to that of Example 37 to give modified polyamide No. 72.

Comparative Examples 9

Into a storage tank kept at 90°C and equipped with a stirrer were charged 72.4 parts of polyester dicarboxylic acid having a mean molecular weight of 1020 obtained from polycaprolactone and 27.6 parts of azelaic acid. The mixture was mixed in a nitrogen atmosphere to give a fully transparent dicarboxylic acid mixture. This dicarboxylic acid mixture and 4,4′-diphenylmethane diisocyanate were continuously fed in at rotation rates of 97.6 g/min. and 52.4 g/min., respectively and were otherwise treated in a manner similar to that of Example 38 to give modified polyamide No. 73.

Comparative Example 10

The procedure of Example 38 was repeated, but the second reactor was omitted. From polyamide extruded through an extruder head of the reactor, $CO_2$ was noted to develop because the reaction was not completed. No stable strands could be obtained.

Comparative Example 11

The procedure of Example 38 was repeated, but screws were used containing no kneading elements in both the first and second reactors. In the reaction product extruded from the extruder head of the second reactor, $CO_2$ was noted to develop, so that no stable strands could be obtained. When the product was dissolved in dimethylacetamide, a large amount of an insoluble gel was detected. The procedures and the results are summarized in Table IX.

Table IX

| | Organic Diiso-cyanate Compo-nent | Dicarbo-xylic Acid | Dicarboxylic Acid Component: Carboxyl-telechelic Polyester (mean mole-cular weight) | Epoxy Compound | Inherent Viscosity (dl/g) | Tensile Strength $(kg/cm^2)$ | Elon-gation (%) | Gel per-cent (%) | Hydro-lysis Resis-tance (%) | Heat Aging Resis-tance (%) | Number of Reactor | Ratio of Kneading Element in Screw (%) |
|---|---|---|---|---|---|---|---|---|---|---|---|---|
| Example | | | | | | | | | | | | |
| 38 | MDI | AZA | cPMPA* (1143) | PGE | 1.02 | 560 | 450 | 0.07 | 93 | 98 | 2 | 28.5 |
| 39 | MDI | AZA | cPMPA* (987) | PGE | 0.98 | 540 | 470 | 0.06 | 90 | 95 | 2 | 28.5 |
| 40 | MDI | AZA | cPCL** (1020) | PGE | 0.84 | 500 | 510 | 0.03 | 88 | 95 | 2 | 28.5 |
| Comparative Example | | | | | | | | | | | | |
| 9 | MDI | AZA | cPMPA* (1143) | none | 0.56 | impos-sible measure | impos-sible measure | 21.5 | - | - | 1 | 28.5 |
| 10 | MDI | AZA | cPMPA* (1143) | none | impos-sible measure | impos-sible measure | impos-sible measure | 30.5 | - | - | 2 | 0 |

cPMPA : polymethylpentane adipate having carboxyl groups at both ends

cPCL : polycaprolactone having carboxyl groups at both ends

## Claims

1. Polyamide copolymers comprising repeating units represented by the general formulae [I] and [II] and containing at least 10 mol% of repeating units of the general formula [II], and having a number average molecular weight of 5000 to 250,000.

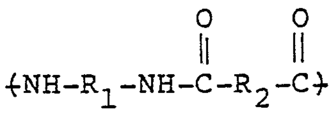 [I]

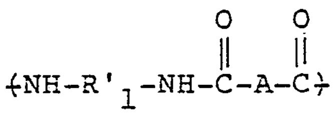 [II]

wherein $R_1$, $R'_1$ and $R_2$, which may be the same or different, each represent a hydrocarbon residue and A represents a segment containing at least one repeating unit selected from the group consisting essentially of the general formulae [III], [IV], [V] and [VI] described below.

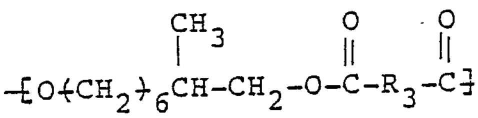 [III]

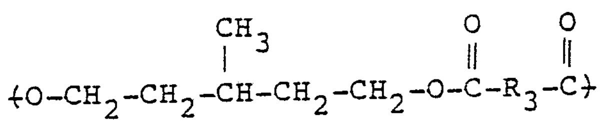 [IV]

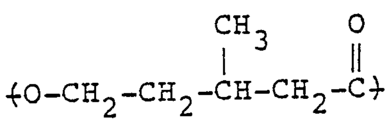 [V]

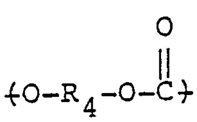 [VI]

wherein $R_3$ and $R_4$, which may be the same or different, each represent a hydrocarbon residue.

2. A polyamide copolymer as claimed in claim 1 wherein $R_1$ and/or $R'_1$ are/is an aromatic hydrocarbon residue having 6 to 20 carbon atoms.

3. A polyamide copolymer as claimed in claim 2 wherein $R_1$ and/or $R'_1$ are/is at least one aromatic hydrocarbon residue selected from the group shown by the following formulae.

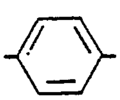 , 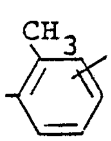 , 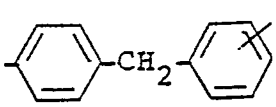

4. A polyamide copolymer as claimed in claim 3 wherein $R_1$ and/or $R'_1$ are/is an aromatic hydrocarbon residue represented by general formula

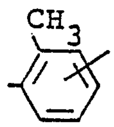

5. A polyamide copolymer as claimed in claim 3 wherein $R_1$ and/or $R'_1$ are/is an aromatic hydrocarbon residue represented by general formula

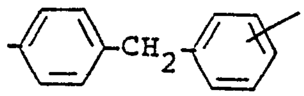

6. A polyamide copolymer as claimed in claim 1 wherein $R_2$ is an aliphatic hydrocarbon residue having 4 to 12 carbon atoms.
7. A polyamide copolymer as claimed in claim 6 wherein $R_2$ is a hydrocarbon residue of a dicarboxylic acid selected from the group consisting of adipic acid, azelaic acid and sebacic acid.
8. A polyamide copolymer as claimed in claim 1 wherein $R_3$ is an aliphatic hydrocarbon residue having 4 to 12 carbon atoms.
9. A polyamide copolymer as claimed in claim 8 wherein $R_3$ is a hydrocarbon residue of adipic acid and/or azelaic acid.
10. A polyamide copolymer as claimed in claim 1 wherein segment A is a residue containing repeating units shown by [III] and repeating units shown by [X] below:

$$-\!\!\left[O\!\left(CH_2\right)_9-O-\overset{\displaystyle O}{\overset{\|}{C}}-R'_3-\overset{\displaystyle O}{\overset{\|}{C}}\right]\!\!-\qquad [X]$$

wherein $R_3$ and $R'_3$ are hydrocarbon residues which are the same or different, and the molar ratio of [III] to [X] ([III]/[X]) is 10/90 to 60/40.
11. A polyamide copolymer as claimed in claim 1 wherein said A contains at least 5 mol% of the repeating units shown by formula [III].
12. A polyamide copolymer as claimed in claim 1 wherein said A contains at least 50 mol% of the repeating units shown by formula [IV].
13. A polyamide copolymer as claimed in claim 1 wherein said A contains at least 30 mol% of the repeating units shown by formula [V].
14. A polyamide copolymer as claimed in claim 1 wherein said A contains at least 30 mol% of the repeating units shown by formula [VI].
15. A polyamide copolymer as claimed in claim 14 wherein $R_4$ is an aliphatic hydrocarbon residue having 2 to 16 carbon atoms.
16. A polyamide copolymer as claimed in claim 15 wherein $R_4$ is a branched aliphatic hydrocarbon residue having 2 to 16 carbon atoms.
17. A polyamide copolymer as claimed in claim 16 wherein said branched aliphatic hydrocarbon residue having 2 to 16 carbon atoms is at least one residue selected from the group represented by the formulae

$$-CH_2-\overset{\displaystyle CH_3}{\overset{|}{C}H}(CH_2)_6,\quad (CH_2)_2\overset{\displaystyle CH_3}{\overset{|}{C}H}(CH_2)_2,\quad -CH_2-\overset{\displaystyle CH_3}{\overset{|}{C}H}-CH_2-,$$

$$-CH_2-\underset{\displaystyle CH_2CH_3}{\underset{|}{\overset{\displaystyle CH_2CH_3}{\overset{|}{C}}}}-CH_2-,\quad -CH_2-\underset{\displaystyle (CH_2)_5CH_3}{\underset{|}{CH}}-CH_2-$$

18. A polyamide copolymer as claimed in claim 15 wherein $R_4$ is a hydrocarbon residue represented by the formula [VIII] and [IX] and the molar ratio of [VIII] to [IX] ([VIII]/[IX]) is 5/95 to 80/20.

$$-CH_2-\overset{\displaystyle CH_3}{\overset{|}{C}H}(CH_2)_6\ [VIII],\quad (CH_2)_9\quad [IX]$$

19. A polyamide copolymer as claimed in claim 14 wherein A is a divalent group represented by the general formula [VII]:

$$-R_5-\overset{\displaystyle O}{\overset{\|}{C}}-O-R_4-O-[(\overset{\displaystyle O}{\overset{\|}{C}}-O-R_4-O)_\ell\overset{\displaystyle O}{\overset{\|}{C}}-R_6]_m\overset{\displaystyle O}{\overset{\|}{C}}-O-R_4-O(\overset{\displaystyle O}{\overset{\|}{C}}-O-R_4-O)_n\overset{\displaystyle O}{\overset{\|}{C}}-R_5-\quad [VII]$$

wherein $\ell$ represents 0 or an integer of 1 to 100, m represents 0 or an integer of 1 to 100, n represents 0 or an integer of 1 to 100; $R_4$, $R_5$ and $R_6$, which may be the same or different, each represent a hydrocarbon residue; provided that when m is 1 or more, $\ell$ and n are not 0 at the same time and when m is 2 or more, $\ell$ is not 0.

20. A polyamide copolymer as claimed in claim 19 wherein $R_5$ is an aliphatic hydrocarbon residue having 2 to 16 carbon atoms and/or an aromatic hydrocarbon residue having 6 to 16 carbon atoms.

21. A polyamide copolymer as claimed in claim 1 wherein A is a residue of a polyester having a molecular weight of 300 to 8,000.

22. A polyamide copolymer as claimed in claim 1 wherein A is a divalent residue of a polycarbonate having a molecular weight of 300 to 8,000.

23. A polyamide copolymer as claimed in claim 1 wherein the number average molecular weight is 5,000 to 150,000.

24. A polyamide copolymer as claimed in claim 1 wherein a compound containing at least one epoxy ring is incorporated.

25. A polyamide copolymer as claimed in claim 24 wherein said compound having at least one epoxy ring is incorporated after the late stage of polymerization of the polyamide or during formation of the polyamide.

26. A polyamide copolymer as claimed in claim 24 wherein said compound having at least one epoxy ring is a monofunctional epoxy compound and/or polyfunctional epoxy compound.

27. A polyamide copolymer as claimed in claim 26 wherein said monofunctional epoxy compound is incorporated in an amount of 1 to 10 wt%.

28. A polyamide copolymer as claimed in claim 26 wherein said polyfunctional epoxy compound is incorporated in an amount of 0.2 to 3 wt%.

29. A method for preparing a modified polyamide copolymer which comprises feeding an organic

diisocyanate component and a dicarboxylic acid component into a multi-screw extruder reactor, performing polymerization by heating under reduced pressure while removing the carbon dioxide gas produced and then continuously incorporating an epoxy compound at a stage subsequent to the late stage of the reaction.

30. A method for preparing a modified polyamide copolymer as claimed in claim 29 which comprises connecting at least two multi-screw extruder reactors with each other in series, removing at least 80% of the carbon dioxide gas in a first reactor, transferring the reaction mixture into a second reactor and subsequent reactors and then incorporating the epoxy compound.

31. A method for preparing a modified polyamide copolymer as claimed in claim 30 wherein said multi-screw type extruder reactors are intermeshing co-rotating multi-screw type including kneading elements.

32. A polyamide copolymer as claimed in claim 25 wherein a compound containing at least one epoxy ring is incorporated.